# EUROPÄISCHE PATENTSCHRIFT

(11) **EP 3 468 828 B1**
(45) Veröffentlichungstag und Bekanntmachung des Hinweises auf die Patenterteilung: **19.02.2020**
(21) Anmeldenummer: 17722374.0
(22) Anmeldetag: 09.05.2017
(51) Int. Cl.: B60K 37/06

(54) **LENKRAD MIT BEDIENELEMENTEN UND VERFAHREN ZUR EINSTELLUNG EINER FUNKTION FÜR EIN FAHRZEUG**
STEERING WHEEL HAVING OPERATOR CONTROL ELEMENTS, AND METHOD FOR SETTING A FUNCTION FOR A VEHICLE
VOLANT MUNI D'ÉLÉMENTS DE COMMANDE ET PROCÉDÉ DE RÉGLAGE D'UNE FONCTION POUR VÉHICULE

(30) Priorität: 08.06.2016 DE 102016007024
(43) Veröffentlichungstag der Anmeldung: 17.04.2019
(73) Patentinhaber: Daimler AG, 70372 Stuttgart (DE)
(72) Erfinder: PRAMSOLER, Marc, 70374 Stuttgart (DE); CIERULLIES, Jens, 75392 Deckenpfronn (DE); HELLWIG, Volker, 70191 Stuttgart (DE)
(74) Vertreter: JENSEN & SON
(86) Internationale Anmeldenummer: PCT/EP2017/000566
(87) Internationale Veröffentlichungsnummer: WO 2017/211438

(56) Entgegenhaltungen:
- DE-A1- 10 346 112
- DE-A1-102004 010 310
- DE-A1-102010 005 483

## Beschreibung

Die Erfindung betrifft ein Lenkrad für ein Kraftfahrzeug, insbesondere ein Lenkrad für ein Kraftfahrzeug mit einem ersten und einem zweiten Bedienelement, und ein Verfahren zur Einstellung einer Funktion mittels eines Lenkrades mit einem ersten und einem zweiten Bedienelement.

In modernen PKW ist häufig eine große Auswahl an Funktionen vorhanden, die über die bloße Fahrzeugführung hinausgehen. Neben Bedienmöglichkeiten einer Fahrzeugbelüftung, einer Klimaanlage und eines Entertainmentsystems sind auch insbesondere verstellbare Parameter des Fahrzeugs, die das Fahrverhalten betreffen, Bestandteil von Nutzeroptionen. So sind beispielsweise adaptive Fahrwerke vom Fahrer des Fahrzeugs einstellbar. Mit einer zunehmenden Anzahl an solchen einstellbaren Funktionen ergeben sich entsprechend hohe Anforderungen an die Ausgestaltung der Mensch-Maschine-Schnittstelle.

Aus der DE 10 2004 010 310 A1 ist ein drehbares Bedienelement mit wenigstens einem integrierten Anzeigeelement und wenigstens einer Bedienfunktion bekannt. In dieser Druckschrift ist vorgesehen, dass das Bedienelement wenigstens ein integriertes Anzeigeelement und wenigstens eine Bedienfunktion aufweist, wobei das wenigstens eine Anzeigeelement frei programmierbar ist.

Aufgabe der Erfindung ist es, die Benutzerfreundlichkeit bei der Bedienung mehrerer Funktionen eines Fahrzeugs zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Lenkrad für ein Kraftfahrzeug, umfassend:
- ein erstes Bedienelement mit einem ersten Display zur Anzeige einer Hauptfunktionsalternative aus mindestens zwei Hauptfunktionsalternativen umfassend eine erste Betätigungseinrichtung zum Durchwechseln der auf dem ersten Display anzeigbaren Hauptfunktionsalternativen,
- ein zweites Bedienelement mit einem zweiten Display zur Anzeige einer Unterfunktionsalternative aus mindestens zwei Unterfunktionsalternativen umfassend eine zweite Betätigungseinrichtung zum Durchwechseln der auf dem zweiten Display anzeigbaren Unterfunktionsalternative, wobei die vom zweiten Bedienelement auswählbaren und vom zweiten Display anzeigbaren Unterfunktionsalternativen in Abhängigkeit von der mittels des ersten Bedienelements ausgewählten und bestätigten Hauptfunktionsalternative vorgegeben sind,
- wobei durch das Betätigen der ersten Betätigungseinrichtung das erste Display von einer momentan angezeigten Hauptfunktionsalternative zu der Anzeige einer nächsten Hauptfunktionsalternative umschaltet und die angezeigte Hauptfunktionsalternative dann ohne weitere Nutzeraktion als ausgewählt und bestätigt gilt.

Eine Haupt- oder Unterfunktionsalternativen wird durch Betätigung der ersten oder zweiten Betätigungseinrichtung ausgewählt und damit zur Anzeige auf dem ersten oder zweiten Display gebracht. Die reine Auswahl einer Haupt- oder Unterfunktionsalternativen ist üblicherweise noch keine Bestätigung d.h. Aktivierung der Funktion sondern erfordert eine Betätigung einer weiteren Betätigungseinrichtung. Gleichwohl kann in vorteilhafter Weise ein Bedienelement derart eingerichtet sein, dass mit der Auswahl an einer Betätigungseinrichtung die Funktion bereits bestätigt, d.h. aktiviert ist.

Das Fahrzeug kann ein PKW, Lkw, Bus, Schienenfahrzeug, Wasserfahrzeug (beispielsweise Schiff), Unterwasserfahrzeug, oder ein Luftfahrzeug sein.

Unter Display sind jegliche Arten von Bildschirmen als auch hinterleuchtete transparente Flächen zu verstehen. Das erste und das zweite Display sind insbesondere Bildschirme, die bevorzugt mit LCD- oder LED-Elementen ausgestattet sind. Alternativ werden OLED-Displays verwendet. Weiterhin bevorzugt werden farbige Displays verwendet. Dies sind Bildschirme, die dazu ausgebildet sind, farbige Symbole und Bilder darzustellen, insbesondere durch eine additive Farbmischung der Grundfarben Rot, Grün und Blau. Das erste und zweite Display sind bevorzugt in dem ersten bzw. zweiten Bedienelement integriert. Weiterhin bevorzugt ist das erste Display, oder das zweite Display, oder das erste und das zweite Display ein berührungsempfindlicher Bildschirm, auch genannt Touchscreen. In dieser bevorzugten Ausführungsform sind die Displays selbst dazu ausgeführt, Eingaben eines Nutzers zu erhalten und an eine Recheneinheit weiterzuleiten. Hiermit sind die erste Betätigungseinrichtung oder die zweite Betätigungseinrichtung mit dem ersten bzw. zweiten Display in einem Bauteil zusammen gefasst.

Der Begriff der "Betätigungseinrichtung" beschreibt eine Schnittstelle, die Eingaben eines Benutzers einer Recheneinheit des Fahrzeugs übermittelt. Die Betätigungseinrichtung ist insbesondere dazu ausgeführt, eine oder mehrere der Hauptfunktions- und Unterfunktionsalternativen in durchwechselnder Anzeige darzustellen. In anderen Worten wird durch das Betätigen der ersten Betätigungseinrichtung von einer auf dem ersten Display momentan angezeigten Hauptfunktionsalternative aus allen Hauptfunktionsalternativen unmittelbar zu der Anzeige einer nächsten Hauptfunktionsalternative umgeschaltet, ein Betätigen der zweiten Betätigungseinrichtung bewirkten ein Umschalten der auf dem zweiten Display angezeigten Unterfunktionsalternative auf die folgende. Diese Modi werden insbesondere beim Durchwechseln der Anzeige jeweils einzeln auf dem ersten oder zweiten Display angezeigt. Die auf dem ersten und/oder zweiten Display angezeigten Haupt-und Unterfunktionsalternativen sind direkt wirksam, in einer alternativen Ausführungsform sind die angezeigten Haupt- und/oder Unterfunktionsalternativen durch einen Nutzer zu bestätigen, d.h. beispielsweise ist die Hauptfunktionsalternative direkt wirksam und eine Unterfunktionsalternative ist durch den Nutzer zu bestätigen.

Eine Unterfunktionsalternativen beschreibt eine von einer Hauptfunktion abhängige Größe oder einen Parameter der Hauptfunktion. Die Unterfunktionsalternative umfasst hiermit eine einer Hauptfunktionsalternative zugeordnete Unterfunktionen oder eine einer Hauptfunktionsalternative zugeordnete und einstellbare Funktionsgröße.
Eine Hauptfunktionsalternative ist als Kategorie zu verstehen, wobei dann die Elemente, die der entsprechenden Kategorie zugeordnet werden, als Unterfunktionsalternative dienen. Insbesondere kann über eine Unterfunktion der Unterfunktionsalternativen ein Wert der Hauptfunktion quantitativ festgelegt werden.

In einer bevorzugten Ausführungsform sind ein "Sportmodus" und ein "Komfortmodus" Hauptfunktionsalternativen. Dabei bewirken die Hauptfunktionen "Komfortprogramm" und "Sportprogramm" entsprechende Anzeigen in den Unterfunktionsalternativen. Insbesondere betrifft dies die Unterfunktionsalternative "Fahrwerkshärte" und Unterfunktionen zu einstellbaren Parametern eines Stabilitäts-Systems (ESP-System) des Fahrzeugs. Weiterhin sind bestimmten Hauptfunktionsalternativen insbesondere Unterfunktionsalternativen bezüglich der Einstellung einer ESP-Regelschwelle, einer Stellung einer Abgasklappe und einstellbaren Soundsystemen des Fahrzeugs zugeordnet.

Es ist eine vorteilhafte Wirkung der Erfindung, dass ein Fahrer eines Fahrzeugs wesentliche Funktionen des Fahrzeugs bedienen kann, ohne dabei seine Hände vom Lenkrad des Fahrzeugs zu nehmen, und insbesondere zum Bedienen der Funktionen sich die Hände des Fahrers am Lenkrad befinden müssen, um die entsprechenden Bedienelemente erreichen zu können. Beide Aspekte dienen sowohl einem erhöhten Komfort als auch der Sicherheit, weil beim Umschalten der Blick nur auf das Lenkrad und nicht auf eine Konsole gelenkt werden muss.

In einer vorteilhaften Ausführungsform umfasst das zweite Bedienelement eine dritte Betätigungseinrichtung zur Bestätigung der auf dem zweiten Display angezeigten Unterfunktionsalternative und/oder umfasst das erste Bedienelement eine vierte Betätigungseinrichtung zur Bestätigung der auf dem ersten Display angezeigten Hauptfunktionsalternative. In einer Ausführungsform ist die auf dem ersten Display angezeigte Hauptfunktionsalternative durch Betätigung einer vierten Betätigungseinrichtung des ersten Bedienelementes zu bestätigen. Gleichermaßen ist in einer weiteren alternativen oder zusätzlichen Ausführungsform eine auf dem zweiten Display angezeigt Unterfunktionsalternative durch Betätigung der dritten Betätigungseinrichtung des zweiten Bedienelementes zu bestätigen. Eine gesonderte Bestätigung vermindert in vorteilhafter Weise das Risiko einer Fehlbedienung. Die vierte oder dritte Betätigungseinrichtung ist bevorzugt in einem als Touchdisplay ausgeführten ersten bzw. zweiten Display integriert.

In vorteilhafter Weise sind die erste, zweite, dritte und/oder vierte Betätigungseinrichtung sowie das erste und zweite Display auf einer dem Fahrer zugewandten Seite des Lenkrades angeordnet. Da die Betätigungselemente im Sichtfeld des Fahrers liegen, kann ein Fahrer die Betätigungselement treffsicher erreichen und bedienen, gleichzeitig ist auf den Displays unmittelbar eine durch die Betätigung ausgelöste Veränderung der Haupt- und/oder Unterfunktionsalternativen abzulesen.

Gemäß einer vorteilhaften Ausführungsform ist das erste oder zweite Display zur Darstellung von Piktogrammen zum Symbolisieren der Hauptfunktionsalternativen oder Unterfunktionsalternativen ausgebildet.

Der Begriff des "Piktogramms" beschreibt ein Symbol - im Zusammenhang mit einer Darstellung von Verknüpfungen, Objekten oder ausführbaren Programmen auf Bildschirmen auch "Icon" genannt - welches durch eine bestimmte Aussagekraft seiner Formen und Farben eine Information wiedergibt. Gemäß dem dargestellten Inhalt wird jedem Piktogramm eine Funktion oder eine Information zugeordnet. Der Zweck eines Piktogramms ist es, eine Information, insbesondere eine visuelle Information, einem Nutzer durch eine entsprechende Assoziation mitzuteilen. Diese dargestellten Informationen oder Funktionen beziehen sich jeweils auf eine oder mehrere der Hauptfunktions- oder Unterfunktionsalternativen. Ein Vorteil dieser Ausführungsform besteht in der schnellen und intuitiven Informationsübermittlung vom ersten oder zweiten Bedienelement an einen Nutzer, ohne dass diese Informationsübermittlung vom Nutzer komplexere Interpretationsaufgaben erfordert.

Gemäß einer weiteren vorteilhaften Ausführungsform ist das erste Bedienelement oder das zweite Bedienelement als Drehsteller ausgebildet, wobei die erste Betätigungseinrichtung bzw. die zweite Betätigungseinrichtung dessen Drehfunktion darstellt.

In dieser Ausführungsform ist das erste Bedienelement oder das zweite Bedienelement ein Drehsteller, insbesondere ein Drehregler. Die erste Betätigungseinrichtung stellt hierbei die Drehfunktion, d.h. das drehbare Element des ersten Bedienelementes und die zweite Betätigungseinrichtung die Drehfunktion d.h. das drehbare Element des zweiten Bedienelementes dar. Bevorzugt ist dieser Drehregler als Rad ausgeführt, dessen äußerer Rand durch ein festes Material ausgebildet ist, beispielsweise Aluminium, und dessen innere Kreisfläche von diesem äußeren Kreis umschlossen wird, wobei die innere Kreisfläche insbesondere in das erste bzw. zweite Display integriert ist. An dieser integrierten Anordnung vorteilhaft ist die intuitive Bedienung für einen Nutzer, dessen Blick automatisch an die Position seiner den Drehsteller bedienenden Hand wandern kann, um die aktuelle Auswahl der mindestens zwei Hauptfunktionsalternativen zu betrachten. In einer vorteilhaften Ausführungsform wird in Reaktion auf das Drehen des Drehstellers an der ersten oder zweiten Betätigungseinrichtung die auf dem ersten oder zweiten Display angezeigte Hauptfunktions- oder Unterfunktionsalternative unmittelbar geändert, die angezeigte Hauptfunktions- oder Unterfunktionsalternative gilt dann ohne weitere Nutzeraktion als ausgewählt und bestätigt.

Gemäß einer weiteren vorteilhaften Ausführungsform weist der Drehsteller eine Drückfunktion auf, die die vierte Betätigungseinrichtung des ersten Bedienelementes bzw. die dritte Betätigungseinrichtung des zweiten Bedienelementes darstellt.

Bevorzugt dreht hierbei ein Nutzer den Drehsteller solange, bis die gewünschte Hauptfunktionsalternative oder Unterfunktionsalternativen auf dem ersten oder zweiten Display angezeigt wird. Der Nutzer wählt dann die angezeigte Hauptfunktionsalternative oder die Unterfunktionsalternative durch Drücken des Drehstellers d.h. durch Drücken der vierten bzw. dritten Betätigungseinrichtung aus, insbesondere durch Drücken in Richtung der beim Drehen des Drehstellers verwendeten Drehachse, wobei unter dem Begriff des "Drückens" eine vom Körper des Nutzers weg gerichtete Kraftausübung, also auch eine Berührung, zu verstehen ist. Die vierte oder dritte Betätigungseinrichtung kann als konventioneller Schalter, Taster oder als touchbedienbarer Schalter ausgeführt sein. Der touchbedienbare Schalter ist hierbei bevorzugt mit einem der Displays als Touchdisplay kombiniert.

Bevorzugt wählt der Nutzer die Hauptfunktionsalternative an dem Drehsteller des ersten Bedienelementes durch Drehen der ersten Betätigungseinrichtung aus und bestätigt durch Drücken auf das vierte Bedienelement die Hauptfunktionsalternative. Weiter wird in diesem Fall durch den Nutzer an dem zweiten Bedienelement durch Drehen der zweiten Betätigungseinrichtung eine der Hauptfunktionsalternative zugeordnete Unterfunktionsalternative ausgewählt und durch Betätigen der dritten Betätigungseinrichtung des zweiten Bedienelements bestätigt. Eine vorteilhafte Wirkung dieser Ausführungsform findet sich in der eindeutigen und bewussten Auswahl einer Funktion unter den Hauptfunktionsalternativen oder den Unterfunktionsalternativen eines Nutzers.

Gemäß einer weiteren vorteilhaften Ausführungsform umfasst das erste oder zweite Bedienelement als die erste bzw. die zweite Betätigungseinrichtung mindestens einen ersten Taster.

Hierbei ist am ersten Bedienelement die erste Betätigungseinrichtung als erster Taster für eine Auswahl aus den zugehörigen Hauptfunktionsalternativen vorgesehen. In dieser bevorzugten Ausführungsform weist das erste Bedienelement nur die erste Betätigungseinrichtung und damit lediglich nur einen Taster auf. Durch Betätigung der ersten Betätigungseinrichtung werden Hauptfunktionsalternativen durchgewechselt und ausgewählt, die am zweiten Display des zweiten Bedienelementes eine Anzeige einer Unterfunktionsalternative bewirkt. Am zweiten Bedienelement ist die zweite Betätigungseinrichtung als erster Taster ausgeführt, dessen Betätigung ein Durchwechseln der auf dem zweiten Display angezeigten Unterfunktionsalternative bewirkt. In einer Ausführungsform ist die auf dem ersten oder zweiten Display angezeigte Haupt- bzw. Unterfunktionsalternative mit der Auswahl auch aktiviert.

In einer bevorzugten Ausführungsform umfasst das erste oder zweite Bedienelement als eine vierte Betätigungseinrichtung bzw. als die dritte Betätigungseinrichtung einen zweiten Taster. In dieser Ausführungsform ist die durch den ersten Taster der ersten oder zweiten Betätigungseinrichtung ausgewählte Haupt- bzw. Unterfunktionsalternative durch einen Nutzer zu bestätigen. Die Bestätigung erfolgt am ersten Bedienelement durch die vierte Betätigungseinrichtung und am zweiten Bedienelement durch die dritte Betätigungseinrichtung. Eine zusätzliche Nutzerbestätigung vermindert das Risiko von Fehlfunktionen. Beispielsweise ist am zweiten Bedienelement die zweite Betätigungseinrichtung als erster Taster und die dritte Betätigungseinrichtung als zweiter Taster ausgeführt. An der zweiten Betätigungseinrichtung wird durch den ersten Taster eine auf dem zweiten Display angezeigte Unterfunktionsalternative durchgewechselt bzw. geändert, mit der dritten Betätigungseinrichtung ist mittels der zweiten Taste die ausgewählte Unterfunktionsalternative bestätigbar.

Der Begriff des "Tasters" beschreibt einen Schalter oder einen Druckknopf, der durch Betätigen zwischen mindestens zwei diskreten Zuständen wechselt, oder zumindest einen Befehl zum Umschalten zwischen zwei diskreten Zuständen an eine weitere Recheneinheit liefert. Die Taster sind hierbei als konventioneller Schalter, als Kipp- oder Wippschalter oder als ein über Berührung (Touch) bedienbares Touchdisplay ausführbar.

Gemäß einer weiteren vorteilhaften Ausführungsform ist der mindestens eine zweite Taster dem mindestens ersten Taster nebengeordnet. Durch den ersten Taster inkrementell einstellbare Unterfunktionsalternativen werden auf auf dem zweiten Display angezeigt und sind durch den nebengeordneten zweiten Taster bestätigbar. Unter dem Begriff Unterfunktionen sind Funktionen oder Funktionsgrößen zu verstehen. Der mindestens eine erste Taster ist bevorzugt als Kippschalter oder touchbedienbarer Schalter ausgeführt. Mit dem ersten Taster können auf einem der Displays angezeigte verschiedene Haupt- oder Unterfunktionsalternativen durchgeschaltet, geändert oder verschiedene Funktions-werte eingestellt und mit dem zweiten Taster bestätigt werden. Insbesondere erhöht ein Nutzer an dem ersten Taster einen Wert der Unterfunktionsalternative durch Drücken um jeweils einen kleinst möglich veränderbaren Wert. Weiterhin bevorzugt wird dieser Wert kontinuierlich und durchlaufend erhöht, wenn ein Nutzer den ersten Taster für eine nach einem Grenzwert bestimmte Zeitdauer gedrückt hält. Es ist insbesondere vorgesehen, dass mittels des ersten Tasters eine Unterfunktionsalternative veränderbar ist, deren Parameter durch den zweiten Taster bestätigbar ist.

Gemäß einer weiteren vorteilhaften Ausführungsform umfasst das zweite Bedienelement zwei erste Taster und jeweils eine nebengeordnete zweite Taste. Das Display umfasst bevorzugt zwei Anzeigefelder zur Anzeige der durch die zweiten Taster einstellbaren Unterfunktionsalternativen. In vorteilhafter Weise hat eine Nutzer mehrere Unterfunktionsalternativen im Blick und kann dieses durch die erste und zweite Tasten verändern.

Gemäß einer weiteren vorteilhaften Ausführungsform ist der erste oder zweite Taster als touchbedienbares Schaltelement ausgebildet. Der erste oder zweite Taster umfasst ein Display auf dem ein Icon angezeigt wird, durch Berührung des Icons wird eine entsprechende Schaltfunktion ausgeführt. Das touchbedienbare Schaltelement kann alternativ auch durch eine Wischgeste bedient werden, wodurch verschiedene Icons zu Anzeige gebracht und ausgewählt werden können. Bevorzugt ist die zweite Taste der zweiten Betätigungseinrichtung als Touchdisplay ausgeführt, durch Berührung eines auf dem Touchdisplay angezeigten Icons wird ein durch die zweite Betätigungseinrichtung, d.h. den ersten Taster, ausgewählte Funktion oder Funktionsgröße bestätigt. Das Display und der Schalter bilden somit eine Einheit. Das erste Bedienelement kann in einer Ausführungsform beispielsweise ein Touchdisplay umfassen, das beispielsweise durch eine Wischbewegung zur Auswahl der Hauptfunktionsalternativen eingerichtet ist. In einer alternativen Ausführungsform können auch der erste und zweite Taster als touchbedienbares Schaltelement ausgeführt sein.
Ein weiterer Aspekt der Erfindung betrifft ein Kraftfahrzeug, umfassend ein Lenkrad wie oben und im Folgenden beschrieben.

Ein weiterer Aspekt der Erfindung betrifft ein Verfahren zur Einstellung einer Funktion mittels eines Lenkrades mit folgenden Schritten:
- Anzeige einer Hauptfunktionsalternative aus mindestens zwei Hauptfunktionsalternativen auf dem ersten Display,
- Durchwechseln aller verfügbaren Hauptfunktionsalternativen und Anzeige auf dem ersten Display in Reaktion auf eine Betätigung der ersten Betätigungseinrichtung,
- Anzeige einer Unterfunktionsalternative aus mindestens zwei Unterfunktionsalternativen auf dem zweiten Display, die der angezeigten und bestätigten Hauptfunktionsalternative zugeordnet sind,
- Durchwechseln aller verfügbaren Unterfunktionsalternativen und Anzeige auf dem zweiten Display in Reaktion auf eine Betätigung der zweiten Betätigungseinrichtung wobei durch das Betätigen der ersten Betätigungseinrichtung von einer Hauptfunktionsalternativen zu der Anzeige einer nächsten Hauptfunktionsalternative umgeschaltet wird und die angezeigte Hauptfunktionsalternative dann ohne weitere Nutzeraktion als ausgewählt und bestätigt gilt.

In einer weiteren Ausführungsform erfolgt eine Bestätigung der im zweiten Display angezeigten Unterfunktionsalternative durch Betätigung der dritten Betätigungseinrichtung. Mit einer Bestätigung erfolgt eine Ausgabe der Funktionsgröße als Signal.

Gemäß einer weiteren vorteilhaften Ausführungsform wird eine mittels der ersten Betätigungseinrichtung ausgewählte Hauptfunktionsalternativen auf dem ersten Display angezeigt, mittels der vierten Betätigungseinrichtung erfolgt eine Bestätigung der im ersten Display angezeigten Hauptfunktionsalternative. Bevorzugt erfolgt erst nach der Bestätigung eine Anzeige der zugehörigen Unterfunktionsalternativen auf dem zweiten Display.

Vorteile und bevorzugte Weiterbildungen des vorgeschlagenen Verfahrens ergeben sich durch eine analoge und sinngemäße Übertragung der im Zusammenhang mit der vorgeschlagenen Vorrichtung vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: ein Fahrzeug mit einem Lenkrad gemäß einem Ausführungsbeispiel der Erfindung,
- Fig. 2: ein erstes und ein zweites Bedienelement an einem Lenkrad gemäß einem weiteren Ausführungsbeispiel der Erfindung,
- Fig. 3: ein Lenkrad mit einem ersten und einem zweiten Bedienelement gemäß einem weiteren Ausführungsbeispiel der Erfindung, und
- Fig. 4: ein Verfahren zur Einstellung einer Funktion mittels eines Lenkrades gemäß einem weiteren Ausführungsbeispiel der Erfindung.

Die Darstellungen in den Figuren sind schematisch und nicht maßstäblich.

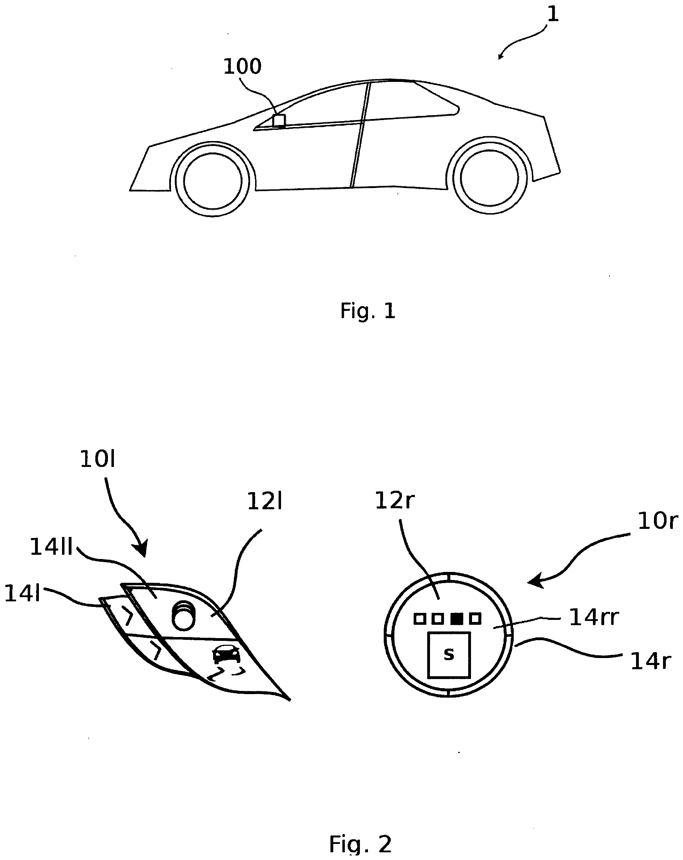

Fig. 1 zeigt ein Fahrzeug 1 mit einem Lenkrad 100. An dem Lenkrad 100 befinden sich ein erstes Bedienelement 10r und ein zweites Bedienelement 10l. An diesen Bedienelementen 10r, 10l sind Betätigungseinrichtungen vorgesehen, die einem Nutzer erlauben, eine Funktion des Fahrzeugs 1 auszuwählen.

Fig. 2 zeigt ein erstes Bedienelement 10r und ein zweites Bedienelement 10l, jeweils mit einem ersten Display 12r und einem zweiten Display 12l. Das erste Bedienelement 10r umfasst weiter eine erste Betätigungseinrichtung 14r und eine vierte Betätigungseinrichtung 14rr, das zweite Bedienelement 10l umfasst eine zweite Betätigungseinrichtung 14l und eine dritte Betätigungseinrichtung1411. Die erste Betätigungseinrichtung 14r ist als Drehregler ausgestaltet und umschließt das erste Display 12r. Durch Betätigung des Drehreglers der ersten Bedieneinrichtung 14r sind verschiedene Hauptfunktionen auf dem ersten Display 12r anzeigbar. Weiterhin ist das erste Bedienelement 10r mit einer Drückfunktion ausgestattet, wobei diese Drückfunktion eine vierte Betätigungseinrichtung 14rr darstellt. Über diese Drückfunktion wird eine Hauptfunktion aus den Hauptfunktionsalternativen bestätigt. Die Hauptfunktion kann auch bereits durch Betätigung des Drehreglers und Anzeige auf dem ersten Display 12r als ausgewählt und bestätigt gelten, so dass eine vierte Betätigungseinrichtung 14rr in einer weiteren Ausführungsform entfallen kann. Insbesondere weist der Drehsteller einen variablen Drehwiderstand auf, sodass ein Nutzer durch Aufbringen einer Kraft oberhalb eines bestimmten Grenzwertes zunächst um eine Raste den Drehsteller bewegt, wobei durch Drehen um einen funktionell zugeordneten Winkel eine neue Hauptfunktion aus den Hauptfunktionsalternativen auf dem ersten Display 12r angezeigt wird. Weiterhin sind die dritte Betätigungseinrichtung 14ll zur Bestätigung der auf dem zweiten Display 12l angezeigten Unterfunktionsalternative oder Funktionsgröße der Unterfunktionsalternative und die zweite Betätigungseinrichtung 14l zum Durchwechseln der auf dem zweiten Display 12l angezeigten Unterfunktionsalternative oder zur Einstellung einer Funktionsgröße der Unterfunktionsalternativen vorgesehen.
Die zweite Betätigungseinrichtung 14l umfasst zwei Kipptaster, über die ein Nutzer auf dem zweiten Display 12l angezeigte Unterfunktionsalternativen, d.h. eine Funktion oder eine Funktionsgröße verändern kann. Das zweite Display 12l umfasst zwei Anzeigefelder zur Anzeige der durch die zwei Kipptaster ausgewählten Unterfunktionsalternative. Diese als Icon angezeigte Funktionen oder Funktionsgrößen werden in einer durchwechselnden Anzeige auf dem als Touchscreen ausgeführten zweiten Display 12l in entsprechenden Anzeigefeldern dargestellt. Das zweite Display 12l ist somit gleichzeitig als dritte Betätigungseinrichtung 14ll ausgeführt, wobei die Bestätigung von ausgewählten Unterfunktionsalternativen oder ausgewählten Funktionsgröße durch Betätigen der dritten Betätigungseinrichtung 14ll, das heißt durch Berührung des als Touchscreens 12l ausgeführten Tasters auf den entsprechenden Anzeigefeldern, erfolgt. In einer alternativen Ausführungsform kann auch nur ein Kipptaster und ein Display 12l mit einem Anzeigefeld vorgesehen sein.

Gemäß einer bevorzugten Ausführungsform sind ein Sportmodus und ein Komfortmodus die Hauptfunktionen oder ein Teil davon, wobei der Sportmodus bevorzugt durch das Symbol 'S' in einem Piktogramm auf dem ersten Display 12r dargestellt wird. Ergänzend ist auf dem ersten Display 12r zur Orientierung im Funktionsmenü angezeigt, wie viel Auswahlmöglichkeiten von Hauptfunktionsalternativen zur Verfügung stehen und welche Hauptfunktion die aktuelle Auswahl anzeigt. In der Figur wird demnach die dritte von vier möglichen Hauptfunktionen angezeigt. Weiterhin bevorzugt folgen der Anzeige des Sportmodus auf dem ersten Display 12r die Anzeigen der Unterfunktionen auf dem zweiten Display 12l, insbesondere die Unterfunktion "Fahrwerkshärte", deren Piktogramm in der Figur in der oberen Hälfte als Feder dargestellt ist, und insbesondere die Unterfunktion "ESP-Regelschwelle", deren Piktogramm in der Figur in der unteren Hälfte des zweiten Displays 12l als Fahrzeug mit Schleuderspuren dargestellt ist. Analog hierzu bewirkt die auf dem ersten Display 12r angezeigte Hauptfunktion "Komfortprogramm", dass auf dem zweiten Display 12l die Unterfunktionen "Einstellung der Abgasklappe" und "Sound" angezeigt werden.

In einer alternativen Ausführungsform kann die zweite Betätigungseinrichtung 14l zur Bestätigung der angezeigten Unterfunktionsalternative oder Funktionsgröße der Unterfunktionsalternative und die dritte Betätigungseinrichtung 14ll zur durchwechselnden Anzeige der Unterfunktionsalternativen oder zur Einstellung der Funktionsgröße vorgesehen werden. Demnach wird über die dritte Betätigungseinrichtung 14ll, die insbesondere als Touchscreen 12l ausgebildet ist, die Anzeige zwischen zwei Unterfunktionen umgeschaltet oder eine Funktionsgröße eingestellt, über die Wipptaster der zweiten Betätigungseinrichtung 14l erfolgt eine Bestätigt und Aktivierung der Unterfunktion oder des Funktionswertes.

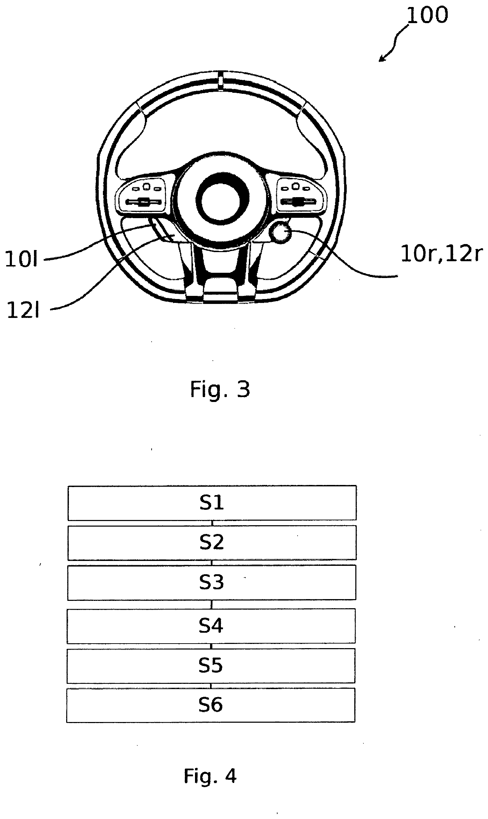

Fig. 3 zeigt ein Lenkrad 100 mit einem ersten Bedienelement 10r und mit einem zweiten Bedienelement 10l. Hier ist das erste Bedienelement 10r an einer Seite des Lenkrades 100 angeordnet, die üblicherweise von der rechten Hand des Fahrers erreichbar ist, ohne dass der Fahrer seine Hand vollständig vom äußeren Rahmen des Lenkrades 100 nehmen muss. Weiterhin ist die erste Betätigungseinrichtung 14r des ersten Bedienelements 10r ein Drehregler, der vom Daumen der rechten Hand eines Fahrers erreichbar ist und somit aus einer Position seiner rechten Hand am Rahmen des Lenkrades 100 bedient werden kann. Gleichermaßen ist das zweite Bedienelement 10l auf der linken Seite des Lenkrades 100 angeordnet, sodass ein Fahrer des Fahrzeugs 1 mit dem Daumen seiner linken Hand die zweite Betätigungseinrichtung 14l und gegebenenfalls die dritte Betätigungseinrichtung 14ll bedienen kann. An dem ersten Bedienelement 10r ist ein erstes Display 12r so angeordnet, dass der Drehregler des ersten Bedienelements 10r das erste Display 12r kreisförmig umschließt. Das zweites Display 12l dagegen ist an dem zweiten Bedienelement 10l angeordnet.

Fig. 4 zeigt ein Verfahren zur Einstellung einer Funktion mittels eines Lenkrades 100 mit folgenden Schritten:
- Anzeige S1 einer Hauptfunktionsalternative aus mindestens zwei Hauptfunktionsalternativen auf dem ersten Display 12r,
- Durchwechseln S2 aller verfügbaren Hauptfunktionsalternativen und Anzeige auf dem ersten Display 12r in Reaktion auf eine Betätigung der ersten Betätigungseinrichtung 14r,
- Anzeige S3 einer Unterfunktionsalternative aus mindestens zwei Unterfunktionsalternativen auf dem zweiten Display 12l, die der angezeigten und bestätigten Hauptfunktionsalternative zugeordnet sind,
- Durchwechseln S4 aller verfügbaren Unterfunktionsalternativen und Anzeige S5 auf dem zweiten Display 12l in Reaktion auf eine Betätigung der zweiten Betätigungseinrichtung 14l, wobei
- durch das Betätigen der ersten Betätigungseinrichtung von einer Hauptfunktionsalternativen zu der Anzeige einer nächsten Hauptfunktionsalternative umgeschaltet wird und die angezeigte Hauptfunktionsalternative dann ohne weitere Nutzeraktion als ausgewählt und bestätigt gilt.

In einer weiteren Ausführungsform ist vorgesehen, dass mittels der ersten Betätigungseinrichtung 14r die im ersten Display 12r angezeigten Hauptfunktionsalternativen in Reaktion auf die Betätigung der ersten Betätigungseinrichtung 14r angezeigt werden und mittels einer vierten Betätigungseinrichtung 14rr eine Bestätigung der im ersten Display 12r angezeigten Hauptfunktionsalternative erfolgt und erst nach der Bestätigung im zweiten Display 12l die zugehörigen Unterfunktionsalternativen angezeigt werden.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehenden Erläuterungen in der Beschreibung, definiert wird.

## Patentansprüche

1. Lenkrad (100) für ein Kraftfahrzeug (1), umfassend:
- ein erstes Bedienelement (10r) mit einem ersten Display (12r) zur Anzeige einer Hauptfunktionsalternative aus mindestens zwei Hauptfunktionsalternativen umfassend eine erste Betätigungseinrichtung (14r) zum Durchwechseln der auf dem ersten Display (12r) anzeigbaren Hauptfunktionsalternativen und
- ein zweites Bedienelement (10l) mit einem zweiten Display (12l) zur Anzeige einer Unterfunktionsalternative aus mindestens zwei Unterfunktionsalternativen umfassend eine zweite Betätigungseinrichtung (14l) zum Durchwechseln der auf dem zweiten Display (12l) anzeigbaren Unterfunktionsalternativen,
wobei die vom zweiten Bedienelement (10l) auswählbaren und vom zweiten Display (12l) anzeigbaren Unterfunktionsalternativen in Abhängigkeit von der auf dem ersten Display (12r) angezeigten und bestätigten Hauptfunktionsalternative vorgegeben sind,
**dadurch gekennzeichnet, dass**
durch das Betätigen der ersten Betätigungseinrichtung (14r) das erste Display (12r) von einer momentan angezeigten Hauptfunktionsalternative zu der Anzeige einer nächsten Hauptfunktionsalternative umschaltet und die angezeigte Hauptfunktionsalternative dann ohne weitere Nutzeraktion als ausgewählt und bestätigt gilt.

2. Lenkrad (100) nach Anspruch 1,
**dadurch gekennzeichnet, dass**
das zweite Bedienelement (10l) eine dritte Betätigungseinrichtung (14ll) zur Bestätigung der auf dem zweiten Display (12l) angezeigten Unterfunktionsalternative umfasst.

3. Lenkrad (100) nach einem der Ansprüche 1 oder 2,
**dadurch gekennzeichnet, dass**
das erste Bedienelement (10r) oder das zweite Bedienelement (10l) als Drehsteller ausgebildet ist, wobei die erste Betätigungseinrichtung (14r) bzw. die zweite Betätigungseinrichtung (14l) dessen Drehfunktion darstellt.

4. Lenkrad (100) nach Anspruch 3,
**dadurch gekennzeichnet, dass**
der Drehsteller eine Drückfunktion aufweist, die die dritte Betätigungseinrichtung (14ll) des zweiten Bedienelementes (10l) darstellt.

5. Lenkrad (100) nach einem der Ansprüche 1 oder 2,
**dadurch gekennzeichnet, dass**
das zweite Bedienelement (10r, 10l) als die zweite Betätigungseinrichtung (14l) mindestens einen ersten Taster umfasst.

6. Lenkrad (100) nach Anspruch 2,
**dadurch gekennzeichnet, dass**
das zweite Bedienelement (10r, 10l) als die dritte Betätigungseinrichtung (14ll) einen zweiten Taster umfasst.

7. Lenkrad (100) nach Anspruch 5 und 6,
**dadurch gekennzeichnet, dass**
der mindestens eine zweite Taster dem mindestens einen ersten Taster nebengeordnet ist, wobei durch den ersten Taster inkrementell einstellbare Unterfunktionsalternativen auf dem zweiten Display (12l) anzeigbar und durch den nebengeordneten zweiten Taster bestätigbar sind.

8. Lenkrad (100) nach Anspruch 7,
**dadurch gekennzeichnet, dass**
das zweite Bedienelement (10l) zwei erste Taster und jeweils ein nebengeordneten zweiten Taster umfasst.

9. Lenkrad (100) nach einem der Ansprüche 5 bis 8,
**dadurch gekennzeichnet, dass**
der erste oder der zweite Taster als touchbedienbares Schaltelement ausgeführt ist.

10. Verfahren zur Einstellung einer Funktion mittels eines Lenkrades (100) gemäß einem der Ansprüche 1 bis 9, mit folgenden Schritten:
- Anzeige (S1) einer Hauptfunktionsalternative aus mindestens zwei Hauptfunktionsalternativen auf dem ersten Display (12r),
- Durchwechseln (S2) aller verfügbaren Hauptfunktionsalternativen und Anzeige auf dem ersten Display (12r) in Reaktion auf eine Betätigung der ersten Betätigungseinrichtung (14r),
- Anzeige (S3) einer Unterfunktionsalternative aus mindestens zwei Unterfunktionsalternativen auf dem zweiten Display (12l), die der angezeigten und bestätigten Hauptfunktionsalternative zugeordnet sind,
- Durchwechseln (S4) aller verfügbaren Unterfunktionsalternativen und Anzeige (S5) auf dem zweiten Display (12l) in Reaktion auf eine Betätigung der zweiten Betätigungseinrichtung (14ll),
**dadurch gekennzeichnet, dass**
durch das Betätigen der ersten Betätigungseinrichtung von einer Hauptfunktionsalternativen zu der Anzeige einer nächsten Hauptfunktionsalternative umgeschaltet wird und die angezeigte Hauptfunktionsalternative dann ohne weitere Nutzeraktion als ausgewählt und bestätigt gilt.

## Claims

1. Steering wheel (100) for a motor vehicle (1), comprising:
- a first control (10r) with a first display (12r) for displaying a main function alternative from at least two main function alternatives, comprising a first actuating device (14r) for cycling through the main function alternatives which can be displayed on the first display (12r), and
- a second control (101) with a second display (12l) for displaying a subfunction alternative from at least two subfunction alternatives, comprising a second actuating device (14l) for cycling through the subfunction alternatives which can be displayed on the second display (12l),
wherein the subfunction alternatives which can be selected by the second control (10l) and displayed by the second display (12l) are preset as a function of the main function alternative displayed on the first display (12r) and actuated,
**characterised in that**
the actuation of the first control (14r) switches the first display (12r) from a currently displayed main function alternative to displaying a next main function alternative and the displayed main function alternative is then deemed to be selected and actuated without any further user action.

2. Steering wheel (100) according to claim 1,
**characterised in that**
the second control (10l) comprises a third actuating device (14ll) for actuating the subfunction alternative displayed un the second display (12l).

3. Steering wheel (100) according to claim 1 or 2,
**characterised in that**
the first control (10r) or the second control (10l) is designed as a rotary actuator, the first actuating device (14r) and/or the second actuating device (14l) representing its rotary function.

4. Steering wheel (100) according to claim 3,
**characterised in that**
the rotary actuator has a pressing function which represents the third actuating device (14ll) of the second control (10l).

5. Steering wheel (100) according to claim 1 or 2,
**characterised in that**
the second control (10r, 10l) comprises at least one first pushbutton as the second actuating device (14l).

6. Steering wheel (100) according to claim 2,
**characterised in that**
the second control (10r, 10l) comprises a second pushbutton as the third actuating device (14ll).

7. Steering wheel (100) according to claims 5 and 6,
**characterised in that**
the at least one second pushbutton is coordinate to the at least one first pushbutton, wherein subfunction alternatives settable by the first pushbutton can be displayed on the second display (12l) and actuated by the coordinate second pushbutton.

8. Steering wheel (100) according to claim 7,
**characterised in that**
the second control (10l) comprises two first pushbuttons and a coordinate second pushbutton each.

9. Steering wheel (100) according to any of claims 5 to 8,
**characterised in that**
the first or the second pushbutton is designed as a touch contact switching element.

10. Method for setting a function by means of a steering wheel (100) according to any of claims 1 to 9, the method comprising the following steps:
- the display (S1) of a main function alternative from at least two main function alternatives on the first display (12r),
- the cycling (S2) through all available main function alternatives and the display on the first display (12r) in reaction to an actuation of the first actuating device (14r),
- the display (S3) of a subfunction alternative from at least two subfunction alternatives on the second display (12l), which subfunction alternatives are assigned to the displayed and actuated main function alternative,
- the cycling (S4) through all available subfunction alternatives and the display on the second display (12l) in reaction to an actuation of the second actuating device (14l),
**characterised in that**
by actuating the first actuating device, there is a changeover from a main function alternative to the display of a next main function alternative and the displayed main function alternative is then deemed to be selected and actuated without any further user action.

## Revendications

1. Volant de direction (100) pour un véhicule automobile (1), comprenant :
- un premier élément de commande (10r) doté d'un premier affichage (12r) pour afficher une alternative de fonction principale parmi au moins deux variantes de fonction principale comprenant un premier dispositif d'actionnement (14r) pour changer les variantes de fonction principale pouvant être affichées sur le premier affichage (12r) et
- un second élément de commande (10) doté d'un second affichage (12r) pour afficher une variante de sous-fonction parmi au moins deux variantes de sous-fonction comprenant un dispositif d'actionnement (14) pour changer les variantes de sous-fonction pouvant être affichées sur le second affichage (12l),
Les variantes de sous-fonction pouvant être sélectionnées par le second élément de commande (10l) et pouvant être affichées sur le second écran (12l) étant prédéfinies en fonction de la variante de fonction principale pouvant être validée et affichée sur le premier affichage (12r),
**caractérisé en ce que** l'actionnement du premier dispositif d'actionnement (14r) permet de passer du premier affichage (12r) d'une variante de fonction principale affichée momentanément à l'affichage d'une variante de fonction principale suivante et la variante de fonction principale affichée est considérée comme sélectionnée et validée sans aucune autre action de l'utilisateur.

2. Volant de direction (100) selon la revendication 1, **caractérisé en ce que** le second élément de commande (10l) comprend un troisième dispositif d'actionnement (14ll) pour valider la variante de sous-fonction affichée sur le second affichage (12l).

3. Volant de direction (100) selon l'une quelconque des revendications 1 ou 2, **caractérisé en ce que** le premier élément de commande (10r) ou le deuxième élément de commande (10l) est conçu sous la forme d'un actuateur rotatif, le premier dispositif d'actionnement (14r) ou le second dispositif d'actionnement (14l) présente sa fonction de rotation.

4. Volant de direction (100) selon la revendication 3, **caractérisé en ce que** l'actuateur rotatif présente une fonction de pression qui présente le second dispositif d'actionnement (14ll) du deuxième élément de commande (10l).

5. Volant de direction (100) selon l'une quelconque des revendications 1 ou 2, **caractérisé en ce que** le deuxième élément de commande (10r, 10l) en tant que second dispositif d'actionnement (14l) comprend au moins un premier bouton.

6. Volant de direction (100) selon la revendication 2, **caractérisé en ce que** le second élément de commande (1 Or, 10l) en tant que troisième dispositif de commande (14ll) comprend un second bouton.

7. Volant de direction (100) selon les revendications 5 et 6, **caractérisé en ce que** ledit second bouton est adjacent audit premier bouton, le premier bouton permettant d'afficher les variantes de sous-fonction réglables de manière incrémentielle sur le second affichage (12l) et de les valider au moyen du second bouton adjacent.

8. Volant de direction (100) selon la revendication 7, **caractérisé en ce que** le deuxième élément de commande (10l) comprend deux premiers boutons et respectivement un second bouton adjacent.

9. Volant de direction (100) selon l'une quelconque des revendications 5 à 8, **caractérisé en ce que** le premier ou le second bouton est conçu sous la forme d'élément de commutation tactile.

10. Procédé de réglage d'une fonction au moyen d'un volant de direction (100) selon l'une quelconque des revendications 1 à 9, comprenant les étapes suivantes consistant à :
- afficher (S1) une variante de fonction principale parmi au moins deux variantes de fonction principale sur le premier affichage (12r),
- changer (S2) toutes les variantes de fonction principales disponibles et afficher sur le premier affichage (12r) en réaction d'un actionnement d'un premier dispositif d'actionnement (14r),
- afficher (S3) une variante de sous-fonction parmi au moins deux variantes de sous-fonction sur le second affichage (12l) qui sont associées aux variantes de fonction principale validées et affichées,
- changer (S4) toutes les variantes de sous-fonction disponibles et afficher (S5) sur le second affichage (12l) en réaction à un actionnement du second dispositif d'actionnement (14ll),
**caractérisé en ce que** l'actionnement du premier dispositif d'actionnement permet de changer d'une variante de fonction principale à l'affichage d'une variante de fonction principale suivante et la variante de fonction principale affichée est alors considérée comme sélectionnée et validée sans aucune autre action de l'utilisateur.
